# EUROPEAN PATENT APPLICATION

(11) **EP 2 889 332 A1**
(43) Date of publication of application: **01.07.2015**
(21) Application number: 12883621.0
(22) Date of filing: 27.12.2012
(51) Int. Cl.: C08L 101/00, C08K 7/14, C08L 97/02, C08J 5/08

(54) **THERMOPLASTIC RESIN COMPOSITE COMPOSITION, THERMOPLASTIC RESIN COMPOSITE MATERIAL, AND METHOD FOR MANUFACTURING SAME**

(30) Priority: 27.08.2012 KR 20120093446
(71) Applicant: LG Hausys, Ltd., Seoul 150-721 (KR)
(72) Inventor: KIM, Sung Min, Seoul 135-090 (KR); OH, Ae Ri, Anyang-si Gyeonggi-do 431-749 (KR); JOUNG, Jae-Youl, Daejeon 301-812 (KR); KIM, Hee June, Gyeonggi-do 463-730 (KR)
(74) Representative: Algemeen Octrooi- en Merkenbureau B.V.
(86) International application number: PCT/KR2012/011609
(87) International publication number: WO 2014/035016

(57) **Abstract**

Provided is a thermoplastic resin composite composition, comprising glass fiber, wood material chips having a column shape, and a thermoplastic resin.

## Description

### [Technical Field]

The present invention relates to a thermoplastic resin composite composition, a thermoplastic resin composite and a method for manufacturing the same.

### [Background Art]

A composite refers to a material prepared by combination of two or more materials and has a structure in which a material referred to as a reinforcing phase and having a form of fibers, plates or particles is embedded buried in a material referred to as a matrix phase and having a form of a resin. The matrix phase provides side-supporting force of a reinforcing material, transfers a load, and endures external impact. Here, the reinforcing material must exhibit high strength and high stiffness.

Since most thermoplastic resins exhibit insufficient heat resistance and have crystallinity, most of the thermoplastic resins have drawbacks of deteriorated impact strength and high shrinkage upon molding. To overcome this problem, techniques in which a polymer alloy is introduced or glass fibers corresponding to an inorganic material are introduced as a reinforcing material have been developed.

Although there is a resin composition aiming at improving properties of a polypropylene resin including glass fibers using wood powder, there are drawbacks in that the resin composition is not anticipated to improve stiffness of a composite since wood flour only serves as fillers rather than a reinforcing material, and that the resin composition is not suitable for injection and extrusion molding due to deterioration in processability together with increased amount of the wood flour.

### [Disclosure]

### [Technical Problem]

It is one aspect of the present invention to provide a thermoplastic resin composite composition, which can exhibit excellent elastic modulus and impact absorption and can minimize deformation such as warpage and the like.

It is another aspect of the present invention to provide a thermoplastic resin composite manufactured by molding the thermoplastic resin composite composition as set forth above.

It is a further aspect of the present invention to provide a method for manufacturing the thermoplastic resin composite as set forth above.

### [Technical Solution]

In accordance with one aspect of the present invention, a thermoplastic resin composite composition includes: glass fibers, column-shaped wood chips, and a thermoplastic resin.

The column-shaped wood chips may have at least one flat surface.

The column shape of the wood chips may include an acicular shape.

The column-shaped wood chips may have a ratio of height to width from about 1:10 to about 1:40.

The column-shaped wood chips may have an average width of about 6 nm to about 40 mm.

The glass fibers may have an average diameter of about 15 µm to about 17 µm

The thermoplastic resin may include one selected from the group consisting of polypropylenes, polyethylenes, polyamides, and combinations thereof.

The thermoplastic resin composite composition may include 100 parts by weight of the thermoplastic resin, about 25 parts by weight to about 80 parts by weight of the glass fibers, and about 80 parts by weight or less of the wood chips.

In accordance with another aspect of the present invention, a thermoplastic resin composite, in which glass fibers and column-shaped wood chips are dispersed in a thermoplastic resin matrix, is provided.

In accordance with a further aspect of the present invention, a method for manufacturing a thermoplastic resin composite includes: mixing a thermoplastic resin and column-shaped wood chips; mixing the mixture of the thermoplastic resin and the wood chips with glass fibers; compression molding the mixture of the thermoplastic resin, the wood chips and the glass fibers; and forming a laminate by compression molding of a stacked body in which the interlayer, at least one surface layer and at least one thermoplastic resin layer are stacked.

The thermoplastic resin and the column-shaped wood chips may be mixed using a first extruder, and the mixture of the thermoplastic resin and the column-shaped wood chips may be mixed with the glass fibers using a second extruder.

Mixing may be performed at a temperature of about 190°C to about 230°C in the first and second extruders.

The thermoplastic resin composite may be manufactured by long fiber reinforced thermoplastic-direct compounding (LFT-D).

### [Advantageous Effects]

The composite manufactured by molding the thermoplastic resin composite composition can exhibit excellent elastic modulus and impact absorption, and can minimize deformation such as warpage and the like.

### [Description of Drawings]

Fig. 1 is a diagram illustrating a method for manufacturing a thermoplastic resin composite according to one embodiment of the present invention.
Fig. 2 is a picture showing thermoplastic resin composites manufactured in Example 1 and Comparative Example 1.

### [Best Mode]

Hereinafter, embodiments of the present invention will be described in detail with reference to the accompanying drawings. It should be understood that the following embodiments are provided for illustration only and are not to be construed in any way as limiting the present invention. The scope of the present invention should be defined only by the accompanying claims and equivalents thereof.

In accordance with one aspect of the present invention, a thermoplastic resin composite composition includes: glass fibers; column-shaped wood chips; and a thermoplastic resin.

Since the thermoplastic resin composite composition is obtained by mixing the thermoplastic resin with the reinforcing materials, the composition can exhibit improved elastic modulus and impact absorption, can minimize deformation, such as warpage and the like, which is a problem upon molding, and can reduce manufacturing costs due to use of low-priced wood chips.

Since the thermoplastic resin composite composition includes the column-shaped wood chips, a composite manufactured by molding the thermoplastic resin composite composition can exhibit improved stiffness in an arrangement direction of the wood chips through arrangement of the wood chips in the composite, exhibit improved impact absorption, and minimize warpage by suppressing shrinkage anisotropy of the thermoplastic resin, as compared with thermoplastic resins reinforced only with glass fibers.

The column shape of the wood chips may include any rod shapes having a certain height. For example, the column-shaped wood chips may have at least one flat surface. The flat surface may have a polygonal shape including a triangular shape and a rectangular shape, without being limited thereto.

In addition, the column shape may include an acicular shape. The acicular shape refers to a needle shape having a narrowing width toward one side with respect to the other side, and the column shape may include any acicular shapes having a certain height.

The column-shaped wood chips may have a ratio of height to width from about 1:10 to about 1:40, specifically from about 1:12 to about 1:16. Within this ratio of the column-shaped wood chips, the thermoplastic resin composite composition can easily realize the advantages as set forth above.

The "height of the column-shaped wood chips" refers to a vertical length thereof and the "width of the column-shaped wood chips" refers to a width horizontally traversing the column-shaped wood chips.

For example, the column-shaped wood chips may have an average width of about 6 mm to about 40 mm. For example, the column-shaped wood chips may have an average height of about 1 mm to about 2 mm.

The wood chips may be obtained from any wood used for industrial purposes. For example, wood obtained from pine trees or the like may be used, and wood chips obtained by crushing heartwood as well as portions close to a surface of trees excluding the heartwood may also be used.

The column-shaped wood chips serve as fillers and as a reinforcing material together with the glass fibers, and thus improve stiffness of the thermoplastic resin composite composition. For example, the wood chips may have a density of 1.1 g/cm³.

The wood chips may be present in an amount of about 80 parts by weight or less, specifically about 20 parts by weight to about 50 parts by weight, based on 100 parts by weight of the thermoplastic resin. Within this content of the wood chip, the thermoplastic resin composite composition can easily realize the advantages as set forth above.

The glass fibers may be any glass fiber known in the art. In one example, to prevent separation from other components in the composition, the glass fibers may be coated with a silane coupling agent for improvement of interfacial adhesion. In another example, the glass fibers may include E-glass continuous fibers.

Specifically, the glass fibers may be roving type glass fibers having an average diameter (filament diameter) of about 15 µm to about 17 µm. The glass fibers may have any length since the glass fibers are cut while passing through a screw in an extruder during the preparation of the composition.

The glass fibers may be present in an amount of about 25 parts by weight to about 80 parts by weight, specifically about 20 parts by weight to about 40 parts by weight, based on 100 parts by weight of the thermoplastic resin. Within this content of the glass fibers, the thermoplastic resin composite composition can secure appropriate price while exhibiting improved strength and shrinkage anisotropy.

The thermoplastic resin may be any thermoplastic resin, which can be molded into films or sheets known in the art, without limitation. For example, the thermoplastic resin may include one selected from the group consisting of polypropylenes, polyethylenes, polyamides, and combinations thereof. In one embodiment, the thermoplastic resin may include polypropylene homopolymer (homo-PP) resins, polypropylene copolymers (co-PP), and combinations thereof. For example, the thermoplastic resin may have a melt flow index of about 40 g/10min to about 800 g/10min.

The thermoplastic resin composite composition may further include additives selected from the group consisting of heat stabilizers, coupling agents, and combinations thereof, depending upon desired properties. The additives may be present in an amount of about 1 part by weight to about 5 parts by weight based on 100 parts by weight of the thermoplastic resin.

In accordance with another aspect of the present invention, a thermoplastic resin composite, in which glass fibers and column-shaped wood chips are dispersed in a thermoplastic resin matrix, is provided.

The thermoplastic resin composite may be manufactured by molding the thermoplastic resin composite composition as set forth above. A specific method for molding the thermoplastic resin composite composition will be described below. In the thermoplastic resin composite manufactured by the method as described below, the glass fibers and the wood chips are uniformly dispersed in the thermoplastic resin matrix.

Details of the thermoplastic resin, the glass fibers and the column-shaped wood chips are as described above.

Since the thermoplastic resin composite exhibits excellent tensile strength, flexural strength and impact resistance, and deformation such as warpage and the like upon molding is effectively prevented by overcoming the problem of shrinkage anisotropy. In addition, the thermoplastic resin composite can reduce manufacturing costs using wood chips of relatively low price. Specifically, the thermoplastic resin composite can be usefully applied to underbody covers, seat backs and the like as a material for producing lightweight automobiles.

In accordance with a further aspect of the present invention, a method for manufacturing a thermoplastic resin composite includes: mixing a thermoplastic resin with column-shaped wood chips; mixing the mixture of the thermoplastic resin and the wood chips with glass fibers; performing compression molding of the mixture of the thermoplastic resin, the wood chips and the glass fibers; and forming a laminate by compression molding of a stacked body in which the interlayer, at least one surface layer and at least one thermoplastic resin layer are stacked.

The thermoplastic resin composite as set forth above may be manufactured by the manufacturing method.

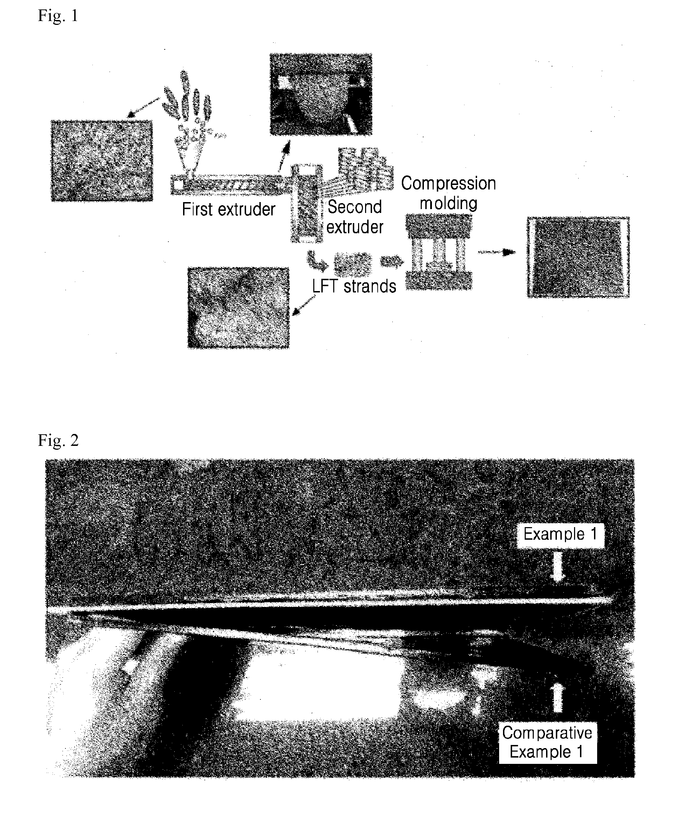

Fig. 1 is a mimetic diagram of a method for manufacturing a thermoplastic resin composite according to one embodiment of the present invention.

Referring to Fig. 1, first and second extruders are prepared. Next, with the two extruders, for example, a thermoplastic resin prepared in the form of pellets and column-shaped wood chips are mixed and introduced into the first extruder first, and then glass fibers are introduced into the second extruder, thereby obtaining a mixture of the thermoplastic resin, the glass fibers and the wood chips. Next, the mixture is subjected to compression molding, thereby manufacturing a thermoplastic resin composite.

A temperature of a cylinder barrel in the first and second extruders may be appropriately adjusted depending upon types of the thermoplastic resin. Specifically, kneading and extrusion may be performed at about 190°C to about 230°C.

As such, since the thermoplastic resin and the wood chips are mixed and introduced into the first extruder first, the mixture can exhibit improved processability through improvement in impregnation of the wood chips in the thermoplastic resin. Although there can be a concern that the mixture is not suitable for injection and extrusion molding due to deteriorated processability when the column-shaped wood chips are mixed, such a concern can be solved by the method according to the present invention. In addition, since the wood chips have a column shape as described above, when the wood chips are arranged together with the glass fibers, the thermoplastic resin composite can exhibit improved properties in an arrangement direction of the wood chips.

In one embodiment, the method for manufacturing a thermoplastic resin composite may be performed by long fiber reinforced thermoplastic-direct compounding (LFT-D).

Hereinafter, the present invention will be described in more detail with reference to some examples. It should be understood that these examples are provided for illustration only and are not to be construed in any way as limiting the present invention.

### Examples and Comparative Examples

### Example 1

According to LFT-D, first, 100 parts by weight of pellets prepared by molding a polypropylene resin and 33.3 parts by weight of columnar chips (average width: 15 mm, ratio of height to width: 1:4) were mixed and introduced into a first extruder, and 33.3 parts by weight of silane coupling agent-coated glass fibers (subjected to polypropylene sizing, SE4121, OCV Co., Ltd.) was introduced into a second extruder, thereby obtaining LFT strands. The LFT strands were obtained by introducing the components into the first and second extruders as described above, followed by kneading and extrusion in cylinder barrels of the first and second extruders at 220°C, respectively. Next, the LFT strands were subjected to compression molding in a mold at 63°C for about 50 seconds, thereby manufacturing a thermoplastic resin composite.

### Example 2

A thermoplastic resin composite was manufactured in the same manner as in Example 1 except that 23.08 parts by weight of the wood chips and 30.77 parts by weight of the glass fibers were introduced.

### Example 3

A thermoplastic resin composite was manufactured in the same manner as in Example 1 except that 14.28 parts by weight of the wood chips and 28.57 parts by weight of the glass fibers were introduced.

### Comparative Example 1

A thermoplastic resin composite was manufactured in the same manner as in Example 1 except that 100 parts by weight of the thermoplastic resin and 25 parts by weight of the glass fibers were used while the wood chips were not used.

### Comparative Example 2

A thermoplastic resin composite was manufactured in the same manner as in Example 1 except that wood flour having an average diameter of 2 mm was used instead of the wood chips.

### Property Evaluation

Each of the thermoplastic resin composites manufactured in Examples 1 to 3 and Comparative Examples 1 to 2 was evaluated as to the following properties.

### [Flexural stiffness]

To evaluate stiffness increase due to the presence of wood chips, a specimen having a length of 5 inches and a width of 0.5 inches in an arrangement direction of the reinforcing materials was prepared, followed by measuring flexural stiffness in accordance with ASTM D790. Results are shown in Table 1.

### [Tensile stiffness]

To evaluate stiffness increase due to the presence of wood chips, a dog bone-shaped specimen in an arrangement direction of the reinforcing materials was prepared, followed by measuring tensile stiffness in accordance with ASTM D638. Results are shown in Table 1.

### [Impact strength]

To evaluate increase in impact strength due to the presence of wood chips, Izod impact strength was measured on a notched specimen at room temperature in accordance with ISO180/1A. Results are shown in Table 1.

### [Shrinkage anisotropy]

In Examples and Comparative Examples, when the LFT strands obtained in the cylinder barrel of the second extruder at about 220°C upon manufacture of the thermoplastic resin composite were placed in the mold of the extruder at about 63°C, the LFT strands shrank upon cooling. Fig. 2 is a picture showing thermoplastic resin composites of Example 1 and Comparative Example 1, which were prepared by compression molding. It can be confirmed that the thermoplastic resin composite of Example 1 exhibited improved shrinkage anisotropy as compared with the thermoplastic resin composite of Comparative Example 1.

**Table 1**

| | Composition ratio (Resin:Glass fiber:Wood chip) (unit: wt%) | Flexural stiffness (GPa) | Tensile stiffness (GPa) | Impact strength (kJ/m²) |
|---|---|---|---|---|
| Example 1 | 60:20:20 | 4.63 | 4.06 | 26.2 |
| Example 2 | 65:20:15 | 4.52 | 4.06 | 25.4 |
| Example 3 | 70:20:10 | 4.50 | 4.05 | 24.0 |
| Comparative Example 1 | 80:20:0 | 3.85 | 4.04 | 15.6 |
| Comparative Example 2 | 60:20:20 (wood flour) | 3.68 | 3.89 | 12.26 |

## Claims

1. A thermoplastic resin composite composition comprising:
glass fibers;
column-shaped wood chips; and
a thermoplastic resin.

2. The composite composition according to claim 1, wherein the column-shaped wood chips have at least one flat surface.

3. The composite composition according to claim 1, wherein the column-shaped wood chips comprises an acicular shape.

4. The composite composition according to claim 1, wherein the column-shaped wood chips have a ratio of height to width from 1:10 to 1:40.

5. The composite composition according to claim 1, wherein the column-shaped wood chips have an average width of 6 mm to 40 mm.

6. The composite composition according to claim 1, wherein the glass fibers have an average diameter of 15 µm to 17 µm

7. The composite composition according to claim 1, wherein the thermoplastic resin comprises one selected from the group consisting of polypropylene, polyethylene, polyamide, and combinations thereof.

8. The composite composition according to claim 1, comprising:
100 parts by weight of the thermoplastic resin;
25 parts by weight to 80 parts by weight of the glass fibers; and
80 parts by weight or less of the wood chips.

9. A thermoplastic resin composite in which glass fibers and column-shaped wood chips are dispersed in a thermoplastic resin matrix.

10. The composite according to claim 9, wherein the column-shaped wood chips have at least one flat surface.

11. The composite according to claim 9, wherein the column shape of the wood chips comprises an acicular shape.

12. The composite according to claim 9, wherein the column-shaped wood chips have a ratio of height to width from 1:10 to 1:40.

13. The composite according to claim 9, wherein the column-shaped wood chips have an average width of 6 mm to 40 mm.

14. The composite according to claim 9, wherein the glass fibers have an average diameter of 15 µm to 17 µm.

15. The composite according to claim 9, wherein the thermoplastic resin comprises one selected from the group consisting of polypropylene, polyethylene, polyamide, and combinations thereof.

16. The composite according to claim 9, comprising:
100 parts by weight of the thermoplastic resin;
25 parts by weight to 80 parts by weight of the glass fibers; and
80 parts by weight or less of the wood chips.

17. A method for manufacturing a thermoplastic resin composite, comprising:
mixing a thermoplastic resin and column-shaped wood chips;
mixing the mixture of the thermoplastic resin and the wood chips with glass fibers;
performing compression molding of the mixture of the thermoplastic resin, the wood chips and the glass fibers; and
forming a laminate by compression molding of a stacked body in which an interlayer, at least one surface layer and at least one thermoplastic resin layer are stacked.

18. The method according to claim 17, wherein the thermoplastic resin and the column-shaped wood chips are mixed using a first extruder, and the mixture of the thermoplastic resin and the wood chips is mixed with the glass fibers using a second extruder.

19. The method according to claim 17, wherein mixing is performed at a temperature of 190°C to 230°C in the first and second extruders.

20. The method according to claim 17, wherein the method for manufacturing a thermoplastic resin composite is performed by long fiber reinforced thermoplastic-direct compounding (LFT-D).
